# EUROPÄISCHE PATENTANMELDUNG

(11) **EP 3 378 825 A1**
(43) Veröffentlichungstag der Anmeldung: **26.09.2018**
(21) Anmeldenummer: 18159627.1
(22) Anmeldetag: 02.03.2018
(51) Int. Cl.: B66F 9/075, B64C 39/02, G05D 1/00

(54) **FLURFÖRDERZEUG MIT EINEM FLUGFÄHIGEN OBJEKT**

(30) Priorität: 20.03.2017 DE 102017105932
(71) Anmelder: STILL GmbH, 22113 Hamburg (DE)
(72) Erfinder: MÜLLER, Martin, 20251 Hamburg (DE); TÜGEL, Caspar, 20253 Hamburg (DE)
(74) Vertreter: Patentship Patentanwaltsgesellschaft mbH

(57) **Zusammenfassung**

Die Erfindung betrifft ein Flurförderzeug (1) mit einem Lastaufnahmemittel (2), einem Fahrzeugkörper (6) und einem Fahrerschutzdach (3), das einen Fahrerarbeitsplatz (4) für einen Fahrer (5) aufweist, umfassend:
- eine Kommunikationsschnittstelle (8);
- mindestens eine Anzeigevorrichtung (7), welche über die Kommunikationsschnittstelle (8) mit mindestens einem flugfähigen Objekt (10) verbindbar ist,
- wobei das flugfähige Objekt (10) mindestens eine Aufnahmevorrichtung (12) umfasst, welche ausgebildet ist, während einer Betriebsposition des flugfähigen Objekts (10) einen Bildausschnitt (13) aufzunehmen, der einen Umgebungsbereich (14) des Flurförderzeugs (1) darstellt, und
- wobei der aufgenommene Bildausschnitt (13) von der Aufnahmevorrichtung (12) des flugfähigen Objekts (10) über die Kommunikationsschnittstelle (8) als Kameradaten zur Darstellung auf der mindestens einen Anzeigevorrichtung (7) des Flurförderzeugs (1) übermittelbar ist.

## Beschreibung

Die Erfindung betrifft ein Flurförderzeug mit einem Lastaufnahmemittel, einem Fahrzeugkörper und einem Fahrerschutzdach, das einen Fahrerarbeitsplatz für einen Fahrer aufweist.

Flurförderzeuge sind mit ihrem Lastaufnahmemittel, welches unter anderem ein Hubgerüst und einen Gabelträger umfasst, dazu ausgelegt, Lasten zu transportieren. Das Lastaufnahmemittel sowie eine gegebenenfalls mit dem Lastaufnahmemittel aufgenommene Last führen jedoch zu Einschränkungen der Sicht des an seinem Fahrerarbeitsplatz befindlichen Fahrers, da das Lastaufnahmemittel und eine gegebenenfalls aufgenommene Last einem Fahrer, der für gewöhnlich an seinem Fahrerarbeitsplatz sitzt und welcher sich in der Regel unmittelbar hinter dem Lastaufnahmemittel befindet, eine freie und direkte Sicht auf dem vor dem Flurförderzeug liegenden Fahrweg oder den zu fahrenden Transportweg nehmen oder zumindest stark einschränken, auf welchem sich das Flurförderzeug entlangbewegt.

Bei Fahrten ohne Last oder mit durchschnittlich großen Lasten kann der Fahrer derartige Sichtverdeckung weitgehend ausgleichen, indem er zum Beispiel durch ständiges Bewegen des Kopfes bzw. des Körpers den Umgebungsbereich vor dem Hubgerüst aus verschiedenen Positionen wahrnimmt. Aus ergonomischen und sicherheitstechnischen Gesichtspunkten ist dies zwar zumutbar, aber nicht optimal.

Ist die zu transportierende Last jedoch so groß, dass ein sicheres Fahren in einer Hauptverrichtung nicht möglich ist, dann muss der Fahrer das Flurförderzeug rückwärts bewegen. Dies ist ebenfalls ergonomisch ungünstig, weil der Fahrer zu einer Verdrehung seines Körpers gezwungen ist.

Ein weiterer Lösungsansatz, um die Sicht des Fahrers an seinem Fahrerarbeitsplatz zu verbessern, besteht bislang darin, Kameras einzusetzen, die an verschiedenen Positionen innerhalb des Flurförderzeugs, wie zum Beispiel am Lastaufnahmemittel (Hubgerüst, Gabelzinken) oder am Fahrerschutzdach installiert sind. Diese technischen Hilfsmittel nehmen einen vor dem Lastaufnahmemittel oder vor einer Last befindlichen Bildausschnitt auf, welcher dem Fahrer anschließend auf eine Anzeigevorrichtung projiziert wird. Auf diese Weise ist der Fahrer in der Lage, eine uneingeschränkte Sicht auf einen Umgebungsbereich vor dem Lastaufnahmemittel oder vor einer Last auf dem Lastaufnahmemittel zu erlangen, welcher für den Fahrer durch das Lastaufnahmemittel oder der auf dem Lastaufnahmemittel befindlichen Last verdeckt ist.

Jedoch ist das optimale Erfassen eines Umgebungsbereiches vor einem Lastaufnahmemittel bzw. vor einer Last durch eine Kamera nicht einfach, denn ist ein optimal erfasster Umgebungsbereich im Wesentlichen von der Positionierung der Kamera am Flurförderzeug abhängig, was je nach Installationsort der Kamera zu folgenden Problemen führen kann: So kann eine Kamera, welche zum Beispiel am Hubmast befestigt ist, den Umgebungsbereich vor der Last unter Umständen nicht ausreichend erfassen, weil, je nach Abmessungen der Last, der tote Winkel zu groß ist. Eine Kamera, welche unmittelbar vorne an den Gabelzinken im Bereich der Gabelzinkenspitzen angeordnet ist, wäre für diesen Zweck zwar geeignet, aber auch nicht optimal, denn häufig sind die Gabelzinken kürzer als die Last selbst. Die Kamera müsste also durch einen entsprechenden Mechanismus auf den Gabelzinken verschiebbar sein, was aufwändig zu realisieren wäre. Zudem würde sich eine auf den Gabelzinken angeordnete Kamera in einem Bereich befinden, in dem eine Beschädigung und eine Verschmutzung der Kamera wahrscheinlich wäre, wenn das Flurförderzeug an Gegenstände stößt oder sich auf einem nassen oder verschmutzten Untergrund bewegt.

Der vorliegenden Erfindung liegt deshalb die Aufgabe zugrunde, ein Flurförderzeug derart weiterzubilden, dass ein Fahrer auf seinem Fahrerarbeitsplatz des Flurförderzeugs eine direkte und damit uneingeschränkte Sicht auf Umgebungsbereiche in der Nähe des Flurförderzeugs erhält, die für ihn sonst verdeckt oder nur sehr schwer einsehbar sind. Eine weitere Aufgabe besteht außerdem darin, die Gefahr von Kollisionen des Flurförderzeugs in schwer einsehbaren Umgebungsbereichen zu reduzieren und damit Schäden für das Fahrzeug, die Umgebung und die zu transportierende Last zu vermeiden.

Erfindungsgemäß wird diese Aufgabe durch die Merkmale des unabhängigen Patentanspruchs 1 gelöst. Vorteilhafte Ausführungsformen der vorliegenden Erfindung sind Gegenstand der abhängigen Ansprüche, der Beschreibung sowie der Figuren.

Gemäß einem Aspekt betrifft die Erfindung ein Flurförderzeug mit einem Lastaufnahmemittel, einem Fahrzeugkörper und einem Fahrerschutzdach, das einen Fahrerarbeitsplatz für einen Fahrer aufweist, umfassend eine Kommunikationsschnittstelle, mindestens eine Anzeigevorrichtung, welche über die Kommunikationsschnittstelle mit mindestens einem flugfähigen Objekt verbindbar ist, wobei das flugfähige Objekt mindestens eine Aufnahmevorrichtung umfasst, welche ausgebildet ist, während einer Betriebsposition des flugfähigen Objekts einen Bildausschnitt aufzunehmen, der einen Umgebungsbereich des Flurförderzeugs darstellt, und wobei der aufgenommene Bildausschnitt von der Aufnahmevorrichtung des flugfähigen Objekts über die Kommunikationsschnittstelle als Kameradaten zur Darstellung auf der mindestens einen Anzeigevorrichtung des Flurförderzeugs übermittelbar ist.

Bei dem erfindungsgemäßen Flurförderzeug wird der Vorteil erreicht, dass eine nahezu vollständige räumliche Erfassung des Umgebungsbereiches des Flurförderzeugs ermöglicht wird. Dieser Umgebungsbereich kann einen Bereich vor dem Lastaufnahmemittel oder vor einer Last, welche sich auf dem Lastaufnahmemittel befindet umfassen. Der Umgebungsbereich kann jedoch je nach Position des flugfähigen Objekts auch einen Bereich neben oder hinter dem Flurförderzeug umfassen und ist deshalb entsprechend flexibel einstellbar.

Mit dem flugfähigen Objekt, das das Flurförderzeug begleitet und mit der Aufnahmevorrichtung den Umgebungsbereich vor und/oder über dem Lastaufnahmemittel erfasst, wird somit eine Sichtverbesserung für den Fahrer und eine Verbesserung der Ergonomie des Fahrers des Flurförderzeugs erzielt.

Ein weiterer Vorteil durch das erfindungsgemäße Flurförderzeug besteht darin, dass am Flurförderzeug selbst keine zusätzlichen Kameras installiert werden müssen. Dadurch muss ein Fahrer sein Fahrverhalten mit dem Flurförderzeug nicht in Abhängigkeit von diesen Kameras anpassen, um Beschädigungen oder Verschmutzungen dieser Kameras zu vermeiden. Außerdem sind keine aufwändigen und fehleranfälligen Kabelführungen zur elektrischen Verbindung dieser Kameras mit elektronischen Steuerungsvorrichtungen oder Anzeigevorrichtungen des Flurförderzeugs erforderlich.

Bei dem erfindungsgemäßen Flurförderzeug wird außerdem der Vorteil erreicht, dass flugfähige Objekte mit entsprechender Steuerungselektronik und einem Kollisionsschutz mittlerweile eine kostengünstige Alternative zu am Flurförderzeug installierten Kamerasystemen darstellen.

Gemäß einer Ausführungsform der vorliegenden Erfindung umfasst das Flurförderzeug eine Steuerungsvorrichtung, welche mit der Kommunikationsschnittstelle verbindbar ist und wobei die Steuerungsvorrichtung ferner ausgebildet ist, das flugfähige Objekt anzusteuern, um das flugfähige Objekt von einer Parkposition in die Betriebsposition zu bringen. Dadurch wird der Vorteil erreicht, dass ein Fahrer an seinem Fahrerarbeitsplatz im Flurförderzeug die Position des flugfähigen Objekts selbsttätig einstellen kann, um den für ihn optimalen Bildausschnitt des Umgebungsbereiches des Flurförderzeugs einzustellen und auszuwählen.

Gemäß einer Ausführungsform der vorliegenden Erfindung ist die Betriebsposition des flugfähigen Objekts in Abhängigkeit des aufzunehmenden Bildausschnitts durch die Steuerungsvorrichtung einstellbar. Dadurch wird der Vorteil erreicht, dass der Fahrer an seinem Fahrerarbeitsplatz stets eine optimale Sicht auf den ihn interessierenden Umgebungsbereich des Flurförderzeugs erhält.

Gemäß einer Ausführungsform der vorliegenden Erfindung stellt die Betriebsposition des flugfähigen Objekts eine fahrzeugnahe Position dar, in welcher sich das flugfähige Objekt in einem optimierten Abstand vor und / oder über dem Lastaufnahmemittel des Flurförderzeugs befindet. Dadurch wird der Vorteil erreicht, dass der Fahrer an seinem Fahrerarbeitsplatz auf der Anzeigevorrichtung zu jedem Zeitpunkt einen optimalen Bildausschnitt des zu beobachtenden Umgebungsbereiches des Flurförderzeugs angezeigt bekommt.

Gemäß einer Ausführungsform der vorliegenden Erfindung ist die Anzeigevorrichtung zwischen dem Lastaufnahmemittel und dem Fahrerschutzdach anbringbar, wobei die Anzeigevorrichtung insbesondere innerhalb eines Sichtfelds des Fahrers anbringbar ist. Dadurch wird der Vorteil erreicht, dass der Fahrer seine Körperhaltung bzw. seine Kopfposition nicht in eine für ihn unnatürlich oder unbequeme Position bringen muss, um den auf der Anzeigevorrichtung dargestellten Bildausschnitt ansehen zu können, während er das Flurförderzeug steuert.

Gemäß einer Ausführungsform der vorliegenden Erfindung umfasst die Anzeigevorrichtung mindestens einen Bildschirm. Dadurch wird der Vorteil erreicht, dass verschiedene von dem flugfähigen Objekt aufgenommene Bildabschnitte und / oder weitere Informationen auf dem mindestens einen Bildschirm anzeigbar sind.

Gemäß einer Ausführungsform der vorliegenden Erfindung umfasst die Aufnahmevorrichtung des flugfähigen Objekts mindestens eine Kamera, insbesondere eine Stereo-Kamera. Dadurch wird der Vorteil erreicht, dass durch die mindestens eine Kamera unterschiedliche Blickwinkel oder Perspektiven von einem Umgebungsbereich oder von verschiedenen Umgebungsbereichen des Flurförderzeugs aufnehmbar sind. Durch die Verwendung einer Stereokamera wird außerdem der Vorteil erzielt, dass eine räumliche Erfassung und / oder eine höhere Auflösung des aufgenommenen Bildabschnitts oder der aufgenommenen Bildausschnitte erstellt werden kann. Der Fahrer erhält also ein detailreicheres Bild von einem aufgenommenen Umgebungsbereich.

Gemäß einer Ausführungsform der vorliegenden Erfindung umfasst die Aufnahmevorrichtung des flugfähigen Objekts eine erste Kamera zur Aufnahme eines ersten Bildausschnitts und eine weitere Kamera zur Aufnahme eines zweiten Bildausschnitts. Dadurch wird der Vorteil erreicht, dass durch die erste Kamera und die zweite Kamera jeweils unterschiedliche Blickwinkel oder Perspektiven von einem Umgebungsbereich oder von mehreren Umgebungsbereichen des Flurförderzeugs aufnehmbar sind. Der virtuelle Sichtradius des Fahrers kann also auf diese Weise vergrößert werden.

Gemäß einer Ausführungsform der vorliegenden Erfindung ist der erste Bildausschnitt über die Kommunikationsschnittstelle auf dem ersten Bildschirm und der zweite Bildausschnitt über die Kommunikationsschnittstelle auf dem zweiten Bildschirm darstellbar. Dadurch wird der Vorteil erzielt, dass dem Fahrer an seinem Fahrerarbeitsplatz unterschiedliche Bildausschnitte eines Umgebungsbereiches oder von verschiedenen Umgebungsbereichen des Flurförderzeugs in gegebenenfalls voneinander unterschiedlichen Perspektiven zeitgleich angezeigt werden können. Dies kann insbesondere beim Rangieren mit aufgenommener Last in engen Lagerhallen von Vorteil sein, um Beschädigungen der Last und / oder des Flurförderzeugs zu vermeiden.

Gemäß einer Ausführungsform der vorliegenden Erfindung umfasst das Flurförderzeug mindestens einen Flächenabschnitt, welcher ausgebildet ist, das flugfähige Objekt für eine Parkposition aufzunehmen. Dadurch wird der Vorteil erzielt, dass das flugfähige Objekt von dem Flurförderzeug transportiert werden kann, wenn es nicht benötigt wird. Dadurch entfallen außerdem zusätzliche und mit Kosten verbundene Transportmittel zur Beförderung des flugfähigen Objekts. Außerdem müssen keine gesonderten Park- oder Abstellflächen für das flugfähige Objekt vorgesehen werden, wenn das flugfähige Objekt nicht eingesetzt oder betrieben wird. Das Abstellen des flugfähigen Objekts auf dem Flurförderzeug erleichtert zudem den Transport des Flurförderzeugs selbst, welches dadurch in Verbindung mit dem flugfähigen Objekt an jedem beliebigen Ort schnell einsatzbereit gemacht werden kann, da für das flugfähige Objekt kein gesonderter Transport erforderlich ist.

Gemäß einer Ausführungsform der vorliegenden Erfindung umfasst der mindestens eine Flächenabschnitt eine Fläche auf dem Fahrerschutzdach und / oder auf dem Fahrzeugkörper und / oder auf dem Lastaufnahmemittel. Dadurch wird der Vorteil erreicht, dass das flugfähige Objekt in einer Parkposition mit bzw. durch das Flurförderzeug transportiert werden kann, wenn sich das flugfähige Objekt auf der entsprechenden Fläche des Flurförderzeugs befindet.

Gemäß einer Ausführungsform der vorliegenden Erfindung sind die Kameradaten der Aufnahmevorrichtung des flugfähigen Objekts an die Kommunikationsschnittstelle des Flurförderzeugs drahtlos übertragbar. Dadurch wird der Vorteil erzielt, dass keine zusätzlichen technischen Hilfsmittel zur Übertragung der Kameradaten an das Flurförderzeug erforderlich sind. Ein drahtloses Übertragen der Kameradaten von dem flugfähigen Objekt kann dann auch an andere elektronische Geräte erfolgen, die sich nicht zwangsläufig auf dem Flurförderzeug befinden müssen. Dadurch können die Kameradaten zum Beispiel auch in stationäre Datenverarbeitungssysteme für eine weitere Verarbeitung und Speicherung übertragen werden.

Gemäß einer Ausführungsform der vorliegenden Erfindung ist der Flächenabschnitt ferner als eine Ladestation ausgebildet ist, elektrische Energie von dem Flurförderzeug zu dem flugfähigen Objekt während seiner Parkposition auf dem Flächenabschnitt zu übertragen, um einen Energiespeicher des flugfähigen Objekts aufzuladen. Dadurch wird der Vorteil erzielt, dass der Energiespeicher des flugfähigen Objekts direkt von den Flurförderzeug aufgeladen werden kann, ohne dass das flugfähige Objekt an eine gesonderte und dafür vorgesehene Ladestation angehängt werden muss, welche in einem Warenlager, in welchem das mobile Transportsystem bestehend aus Flurförderzeug und flugfähigem Objekt nur temporär eingesetzt wird, nicht vorhanden ist. Dadurch kann das Einsatzgebiet dieses mobilen Transportsystems auf einfache Weise vergrößert werden.

Gemäß einer Ausführungsform der vorliegenden Erfindung sind die Kameradaten der Aufnahmevorrichtung des flugfähigen Objekts an die Kommunikationsschnittstelle des Flurförderzeugs kabelgebunden durch ein Kabel, welches das flugfähige Objekt und das Flurförderzeug miteinander verbindet, übertragbar. Dadurch wird der Vorteil erzielt, dass das flugfähige Objekt seine Kameradaten sicher an die Kommunikationsschnittstelle des Flurförderzeugs übertragen kann, ohne dass diese Übertragung durch etwaige Signalstörungen oder Signalinterferenzen unterbrochen wird. Da das flugfähige Objekt in der Regel nahe am Flurförderzeug fliegt, kann mit einem Kabel eine einfache Verbindung des flugfähigen Objekts mit dem Flurförderzeug zur Übermittlung der Kameradaten und / oder der elektrischen Energie erfolgen.

Gemäß einer Ausführungsform der vorliegenden Erfindung ist das Kabel ferner ausgebildet, elektrische Energie von dem Flurförderzeug zum flugfähigen Objekt zu dessen betrieb zu übertragen. Dadurch wird eine einfache Versorgung des flugfähigen Objekts mit elektrischer Energie zu dessen Betrieb möglich.

Gemäß einer Ausführungsform der vorliegenden Erfindung ist die Kommunikationsschnittstelle ausgebildet, die erzeugten Kameradaten in eine für den Fahrer geeignete Perspektive, vorzugsweise eine Fahrerperspektive und / oder eine Bird-View-Perspektive, in Abhängigkeit von der verwendeten Anzeigevorrichtung umzurechnen. Dadurch wird der Vorteil erzielt, dass der Fahrer an seinem Fahrerarbeitsplatz stets ein optimales und vor allem, ein realistisches Bild auf den für ihn interessierenden Umgebungsbereich des Flurförderzeugs erhält. Dadurch kann der Fahrer einen auf der Anzeigevorrichtung dargestellten Bildausschnitt schneller erfassen, so dass ein verzögerungsfreier Betrieb des Flurförderzeugs durch den Fahrer möglich wird.

Gemäß einer Ausführungsform der vorliegenden Erfindung ist die Anzeigevorrichtung als Bildschirm und / oder als ein transparentes Display und / oder als ein Head-up-Display und / oder als ein Sichtmittel zur Darstellung von 3D-animierten Umgebungsinformationen auf Basis der erzeugten Kameradaten ausgebildet. Dadurch wird der Vorteil erzielt, dass der von der Aufnahmevorrichtung des flugfähigen Objekts aufgenommene Bildausschnitt flexibel auf verschiedene Anzeigevorrichtungen dargestellt werden kann. Der Fahrer ist also nicht auf eine einzige Darstellung auf einer fest installierten Anzeigevorrichtung festgelegt, sondern kann je nach Komplexität des durchzuführenden Transportauftrags verschiedene Typen von Anzeigevorrichtungen nutzen, wenn eine andere oder detaillierte Darstellung des aufgenommenen Umgebungsbereiches des Flurförderzeugs zur sicheren Abwicklung des Transportauftrags für den Fahrer an seinem Fahrerarbeitsplatz geeigneter erscheint.

Gemäß einer Ausführungsform der vorliegenden Erfindung werden die erzeugten Kameradaten über die Kommunikationsschnittstelle einem im Flurförderzeug vorgesehenen Kollisionswarnsystem und / oder einem Manövrierassistenzsystem übermittelt. Dadurch wird der Vorteil erzielt, dass die Sicherheit des Fahrers und von Personen in der Umgebung des Flurförderzeugs erhöht wird und Beschädigungen an der zu transportierenden Last und an dem Flurförderzeug während seines Betriebes vermieden werden können.

Gemäß einer Ausführungsform der vorliegenden Erfindung ist die Steuerungsvorrichtung ausgebildet, die Bewegung des flugfähigen Objekts in Abhängigkeit von der Bewegung des Flurförderzeugs anzupassen. Dadurch wird der Vorteil erzielt, dass für den Fahrer des Flurförderzeugs zu jedem Zeitpunkt auf seiner gesamten zurückzulegenden Transportstrecke oder auf seinem Fahrtweg stets ein optimaler Bildausschnitt des Umgebungsbereiches des Flurförderzeugs aufnehmbar ist.

Gemäß einer Ausführungsform der vorliegenden Erfindung ist die Steuerungsvorrichtung ausgebildet, die Bewegung des flugfähigen Objekts in Abhängigkeit von einer Hubhöhe des Lastaufnahmemittels anzupassen. Dadurch wird der Vorteil erzielt, dass dem Fahrer ein optimaler Bildausschnitt zum Beispiel bei einem Einlagern oder einem Auslagern einer zu transportierenden Last angezeigt werden kann, sodass die Last effizient und schnell und ohne diese zu beschädigen auf das Lastaufnahmemittel geladen oder in eine entsprechende für die Last vorgesehene Parkposition, etwa in einem Regal eines Warenlagers, gebracht werden kann.

Gemäß einer Ausführungsform der vorliegenden Erfindung umfasst das flugfähige Objekt mindestens ein Leuchtmittel, um den Umgebungsbereich des Flurförderzeugs auszuleuchten. Dadurch wird der Vorteil erzielt, dass dem Fahrer auch bei schlechten Sichtverhältnissen ein optimales Bild des zu beobachtenden Umgebungsbereiches angezeigt wird und der Fahrer seinen Transportauftrag dennoch effizient und in kurzer Zeit abarbeiten kann. Zudem wird die Sicherheit für den Fahrer erhöht und das Flurförderzeug sowie eine gegebenenfalls zu transportierende Last vor Beschädigungen geschützt, da der Fahrer Hindernisse oder Objekte, die auf seinem Transportweg oder seiner Fahrtstrecke liegen, rechtzeitig erkennen und sein Fahrverhalten zur Vermeidung von Kollisionen entsprechend anpassen kann.

Gemäß einer Ausführungsform der vorliegenden Erfindung ist das flugfähige Objekt als eine Flugdrohne ausgebildet, welche über die Steuerungsvorrichtung steuerbar ist. Dadurch wird der Vorteil erzielt, dass ein standardisiertes und auf dem Markt übliches flugfähiges Objekt mit dem Flurförderzeug koppelbar ist. Zusätzliche Kosten, um das flugfähige Objekt durch technische Anpassungen für einen Transportauftrag zusammen mit dem Flurförderzeug einsatzfähig zu machen, können dadurch entfallen oder zumindest minimiert werden.

Gemäß einer Ausführungsform der vorliegenden Erfindung weist das flugfähige Objekt eine Erfassungsvorrichtung für Identifikationsmittel, insbesondere einen RFID-Transponder, einen Barcode oder einem Datamatrix-Code, auf, um Identifikationsdaten zu erfassen. Dadurch wird der Vorteil erzielt, dass Waren auf einfache Weise automatisiert identifiziert werden können. Das manuelle Einscannen einzelner Waren durch Mitarbeiter kann dadurch entfallen. Dieser Schritt der Warenidentifikation kann dabei bereits während des Einlagerns oder des Auslagerns der entsprechenden Ware erfolgen, so dass eine Information über die betreffende Ware für den Fahrer im Flurförderzeug sofort, also insbesondere in Echtzeit, zur Verfügung gestellt werden kann. Außerdem lässt sich ein Lagerbestand eines Warenlagers effizient und zeitnah, das heißt insbesondere in Echtzeit, überprüfen und bestehende Datenverarbeitungssysteme für ein Warenlager können durch eine in Echtzeit erfolgte Warenidentifikation mit einem vorhandenen Warenbestand des Warenlagers auf einfache Weise und schnell abgeglichen werden, wenn diese Identifikationsdaten zusätzlich an elektronische Geräte übermittelt werden, die sich außerhalb des Flurförderzeugs befinden. Diese Übermittlung kann von der Erfassungsvorrichtung des flugfähigen Objekts selbst vorgenommen werden.

Gemäß einer Ausführungsform der vorliegenden Erfindung ist das flugfähige Objekt ausgebildet, die Identifikationsdaten über die Kommunikationsschnittstelle des Flurförderzeugs an das Flurförderzeug zur Darstellung auf der mindestens einen Anzeigevorrichtung zu übermitteln. Dadurch wird der Vorteil erzielt, das Informationen von Waren oder Lasten, die in ein Warenlager eingelagert oder zur weiteren Verwendung aus einem Warenlager entnommen werden sollen, dem Fahrer unmittelbar, also in Echtzeit, zur Verfügung gestellt werden können. Auf diese Weise können Fehler bei einer Verschiebung von falschen Waren oder Lasten, die nicht einem aktuellen Transportauftrag entsprechen, zum Beispiel aus einem Warenlager heraus, reduziert werden. Die Identifikationsdaten können von der Kommunikationsschnittstelle des Flurförderzeugs jedoch auch zusätzlich an Datenverarbeitungssysteme zur Verarbeitung, Bereitstellung und Speicherung dieser Identifikationsdaten der betreffenden Waren übermittelt werden, welche sich außerhalb des Flurförderzeugs befinden. Auf diese Weise lassen sich die Warenbestände in diesen Datenverarbeitungssystemen, die Datenbanken umfassen können, bereits während der Abwicklung des Transportauftrags in Echtzeit aktualisieren.

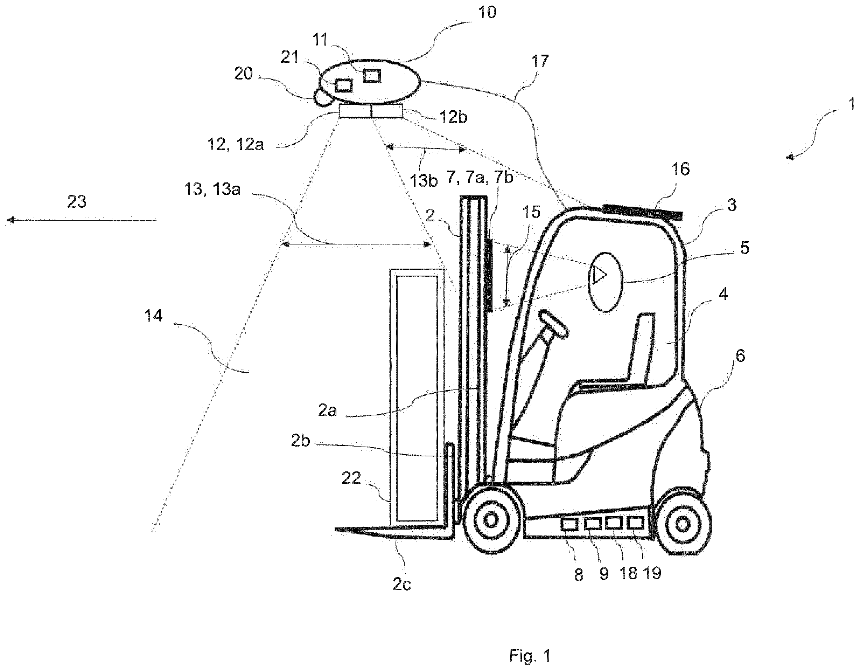

Weitere Vorteile und Einzelheiten der Erfindung werden anhand des in den schematischen Figuren dargestellten Ausführungsbeispiels näher erläutert. Hierbei zeigt
- Figur 1: eine schematische Abbildung eines erfindungsgemäßen Flurförderzeugs mit einem in einer Betriebsposition befindlichen flugfähigen Objekt gemäß einer Ausführungsform der vorliegenden Erfindung.

Die Fig. 1 zeigt eine schematische Abbildung eines erfindungsgemäßen Flurförderzeugs 1 mit einem in einer Betriebsposition befindlichen flugfähigen Objekt 10, welches vorzugsweise als eine Flugdrohne ausgebildet ist. Das Flurförderzeug 1 umfasst ein Lastaufnahmemittel 2, einen Fahrzeugkörper 6 und ein Fahrerschutzdach 3, das einen Fahrerarbeitsplatz 4 für einen Fahrer 5 aufweist. Das Lastaufnahmemittel 2 umfasst gemäß der Fig. 1 ein Hubgerüst 2a. An dem Hubgerüst oder Hubmast 2a ist ein Hubschlitten 2b, beispielsweise ein Gabelträger, anhebbar und absenkbar befestigt, an welchem Gabelzinken 2c angebracht sind. In der Fig. 1 tragen die Gabelzinken 2c zudem eine zu transportierende Last 22.

Im dargestellten Ausführungsbeispiel ist das Flurförderzeug 1 als Gegengewichtsgabelstapler ausgebildet.

Das Flurförderzeug 1 umfasst ferner eine Kommunikationsstelle 8, mindestens eine Anzeigevorrichtung 7, welche über die Kommunikationsschnittstelle 8 mit dem flugfähigen Objekt 10 verbindbar ist. Das flugfähige Objekt 10 umfasst mindestens eine Aufnahmevorrichtung 12, welche ausgebildet ist, während einer Betriebsposition des flugfähigen Objekts 10 einen Bildausschnitt 13 aufzunehmen, der einen Umgebungsbereich 14 des Flurförderzeugs 1 darstellt. Der aufgenommene Bildausschnitt 13 wird dabei von der Aufnahmevorrichtung 12 des flugfähigen Objekts 10 über die Kommunikationsschnittstelle 8 als Kameradaten zur Darstellung auf der mindestens einen Anzeigevorrichtung 7 des Flurförderzeugs 1 übermittelt. Der Bildausschnitt 13 kann dabei einen ersten Bildausschnitt 13a, welcher von einer ersten Kamera 12a und einen zweiten Bildausschnitt 13b umfassen, welcher von einer zweiten Kamera 12b der Aufnahmevorrichtung 12 des flugfähigen Objekts 10 aufgenommen wird. Auf diese Weise können parallel, also synchron oder zeitgleich, unterschiedliche Bildausschnitte von dem flugfähigen Objekt 10 aufgenommen werden, um einen möglichst vollständigen bzw. umfassenden Umgebungsbereich 14 in der Nähe des Flurförderzeugs 1 abzudecken.

Die Kameradaten der Aufnahmevorrichtung 12 des flugfähigen Objekts 10 können dabei an die Kommunikationsschnittstelle 8 des Flurförderzeugs drahtlos oder wie in der Fig. 1 über ein Kabel 17, welches das flugfähige Objekt 10 mit dem Flurförderzeug 1 verbindet, übertragen werden. Bei der Verwendung eines Kabels 17 kann neben den Kameradaten auch elektrische Energie von dem Flurförderzeug 1 zu dem flugfähigen Objekt 10 übertragen werden, um das flugfähige Objekt 10 für dessen Betrieb mit elektrischer Energie zu versorgen.

Das Flurförderzeug 1 umfasst ferner eine Steuerungsvorrichtung 9, welche mit der Kommunikationsschnittstelle 8 verbindbar ist. Die Steuerungsvorrichtung 9 ist dabei ausgebildet, das flugfähige Objekt 10 anzusteuern, um das flugfähige Objekt 10 von einer Parkposition in die Betriebsposition zu bringen. Die Betriebsposition des flugfähigen Objekts 10 stellt dabei eine fahrzeugnahe Position dar, in welcher sich das flugfähige Objekt 10 in einem optimierten Abstand vor und / oder über dem Lastaufnahmemittel 2 des Flurförderzeugs 1 befindet. Die Betriebsposition des flugfähigen Objekts 10 ist dabei in Abhängigkeit des aufzunehmenden Bildausschnitts 13 durch die Steuerungsvorrichtung 9 einstellbar. Dies kann vorzugsweise über den Fahrer 5 an seinem Fahrerarbeitsplatz 4 erfolgen, der die Steuerungsvorrichtung 9 entsprechend bedient, zum Beispiel über ein Bedienpult (in Fig. 1 nicht dargestellt). Die Steuerungsvorrichtung 9 kann ferner ausgebildet sein, die Bewegung des flugfähigen Objekts 10 in Abhängigkeit von einer Hubhöhe des Lastaufnahmemittels 2 anzupassen. Generell kann die Steuerungsvorrichtung 9 ausgebildet sein, die Bewegung des flugfähigen Objekts 10 in Abhängigkeit von der Bewegung oder der Fahrbewegung des Flurförderzeugs 1 anzupassen. Je nach Kamerasichtfeld können verschiedene Umgebungsbereiche bzw. Bereiches des Flurförderzeugs 1 erfasst und für eine Darstellung auf der mindestens einen Anzeigevorrichtung 7 oder für eine Verwendung durch entsprechende Assistenzsysteme bereitgestellt werden. Bei einer Rückwärtsfahrt des Flurförderzeugs 1 könnte die Flugdrohne 10 also gegebenenfalls autonom oder durch den Fahrer 5 gesteuert ihre Position und Ausrichtung anpassen, um als Rückfahrkamera zu fungieren.

Die Anzeigevorrichtung 7 des Flurförderzeugs 1 zur Darstellung des aufgenommenen Bildausschnitts 13, 13a, 13b ist gemäß der Fig. 1 zwischen dem Lastaufnahmemittel 2 und dem Fahrerschutzdach 3 angebracht. Die Anzeigevorrichtung 7 befindet sich dabei innerhalb eines Sichtfelds 15 des Fahrers 5. Auf diese Weise kann der Fahrer 5 in eine Hauptbewegungsrichtung HF 23 des Flurförderzeugs 1 sehen und zugleich die auf der Anzeigevorrichtung 7 vor ihm dargestellten Bildausschnitte 13, 13a, 13b betrachten, so dass der Fahrer 5 seine ursprüngliche Kopfposition nicht oder nur minimal verändern muss.

Die Aufnahmevorrichtung 12 des flugfähigen Objekts 10 umfasst in der Fig. 1 eine erste Kamera 12a zur Aufnahme eines ersten Bildausschnitts 13a und eine weitere Kamera 12b zur Aufnahme eines zweiten Bildausschnitts 13b. Mindestens eine dieser Kameras kann dabei als eine Stereo-Kamera ausgebildet sein. Die Anzeigevorrichtung 7 des Flurförderzeugs 1 umfasst mindestens einen Bildschirm 7a, 7b (in der Fig. 1 nicht dargestellt). Der von der ersten Kamera 12a aufgenommene erste Bildausschnitt 13a wird gemäß der Ausführungsform der Fig. 1 über die Kommunikationsschnittstelle 8 auf dem ersten Bildschirm 7a und der von der weiteren Kamera 12b zweite Bildausschnitt 13b wird über die Kommunikationsschnittstelle 8 auf dem zweiten Bildschirm 7b für den Fahrer 5 dargestellt. Auf diese Weise kann der Fahrer 5 zeitgleich verschiedene Perspektiven oder Blickwinkel eines Umgebungsbereiches 14, der aber auch mehrere Bereiche umfassen kann, einsehen, vorzugsweise während des Fahrbetriebes des Flurförderzeugs 1.

Das Flurförderzeug 1 umfasst in der Fig. 1 mindestens einen Flächenabschnitt 16, welcher ausgebildet ist, das flugfähige Objekt 10 für eine Parkposition aufzunehmen. In der Fig. 1 ist dieser Flächenabschnitt 16 auf dem Fahrerschutzdach 3 angeordnet. Dieser kann jedoch auch eine Fläche auf dem Fahrzeugkörper 6, beispielsweise einem Gegengewicht, und / oder auf dem Lastaufnahmemittel 2 umfassen, sofern dies zweckmäßig erscheint.

Der Flächenabschnitt 16 kann ferner als eine Ladestation ausgebildet sein, um elektrische Energie von dem Flurförderzeug 1 zu dem flugfähigen Objekt 10 während seiner Parkposition auf dem Flächenabschnitt 16 zu übertragen, um einen Energiespeicher 11 des flugfähigen Objekts 10, der zum Beispiel als ein Akku oder eine aufladbare Batterie ausgebildet sein kann, aufzuladen. Dies kann vorzugsweise erfolgen, während das flugfähige Objekt 10 nicht eingesetzt wird, sich aber das Flurförderzeug 1 dennoch fortbewegt. Die Ausführung des Flächenabschnitts 16 als Ladestation ermöglicht insbesondere bei einer drahtlosen Verbindung des flugfähigen Objekts 10 mit dem Flurförderzeug 1 eine einfache Versorgung des flugfähigen Objekts 10 mit elektrischer Energie.

Die Anzeigevorrichtung 7 kann dabei als ein Bildschirm und / oder ein transparentes Display und / oder als ein Head-up-Display und / oder als ein Sichtmittel zur Darstellung von 3D-animierten Umgebungsinformationen auf Basis der erzeugten Kameradaten ausgebildet sein. Das Sichtmittel kann dabei zum Beispiel eine 3D-Brille sein, welche sich der Fahrer 5 während des Betriebs des Flurförderzeugs 1 aufsetzt. Die von dem flugfähigen Objekt 10 erzeugten Kameradaten können dann über die Kommunikationsschnittstelle 8 direkt auf die Anzeigevorrichtung 7 übertragen werden.

Die Kommunikationsschnittstelle 8 kann ferner ausgebildet sein, die erzeugten Kameradaten in eine für den Fahrer 5 geeignete Perspektive, vorzugsweise einer Fahrerperspektive und / oder einer Bird-View-Perspektive, in Abhängigkeit von der verwendeten Anzeigevorrichtung 7 umzurechnen. Die entsprechende Perspektive kann dann für das jeweilige Sichtmittel, welches der Fahrer 5 benutzt, in geeigneter Weise umgerechnet und angepasst werden.

Die erzeugten Kameradaten können zudem über die Kommunikationsschnittstelle 8 einem im Flurförderzeug 1 vorgesehenen Kollisionswarnsystem 18 und / oder einem Manövrierassistenzsystem 19 übermittelt werden.

Das flugfähige Objekt 10 ist gemäß der Fig. 1 mit mindestens einem Leuchtmittel 20 ausgestattet, um den Umgebungsbereich 14 des Flurförderzeugs 1 optimal ausleuchten zu können. Auf diese Weise hat der Fahrer 5 auch bei Nacht oder in nicht ausreichend beleuchteten Lagerhallen stets eine gute Sicht auf den für ihn interessierenden Umgebungsbereich 14 auf seiner Fahrtstrecke und kann seinen Transportauftrag sicher und schnell ausführen. Das Leuchtmittel 20 des flugfähigen Objekts 10 kann auch dazu verwendet werden, das Manövrieren für den Fahrer 5 in engen oder schmalen Lagerstellen oder beim Ein- oder Auslagern von der Last 20 in Lagerregalen zu erleichtern.

Um eine räumliche Erfassung eines Umgebungsbereiches 14 in der Nähe des Flurförderzeugs 1 zu optimieren, kann es zudem sinnvoll sein, die Position des als Flugdrohne ausgebildeten flugfähigen Objekts 10 zu oszillieren oder mehrere Flugdrohnen gleichzeitig zu verwenden. Auch in Bezug auf die Sicherheit eines derartigen Transportsystems bestehend aus Flurförderzeug und mindestens einer Flugdrohne, kann die Verwendung von mehr als einer Flugdrohne zur Erzeugung eines redundanten Systems sinnvoll sein.

Das flugfähige Objekt 10 kann ferner eine Erfassungsvorrichtung 21 für Identifikationsmittel, insbesondere einen RFID-Transponder, einen Barcode oder einem Datamatrix-Code, aufweisen, um Identifikationsdaten von Waren oder von Waren- und Lagerplätzen zu erfassen. Die Erfassungsvorrichtung 21 kann dabei aus einem oder mehreren Sensoren bestehen. Diese Sensoren können wiederum aus einer oder mehreren Einrichtungen bestehen, die in der Lage sind, durch entsprechende Scanverfahren, die Identifikationsmittel an Waren oder an Waren- und Lagerplätzen zu erkennen. Diese Identifikationsdaten können dann von dem flugfähigen Objekt 10 über die Kommunikationsschnittstelle 8 des Flurförderzeugs 1 an das Flurförderzeug 1 zur Darstellung auf der Anzeigevorrichtung 7 übermittelt werden. Alternativ können diese Identifikationsdaten von dem flugfähigen Objekt 10 drahtlos, also per Funk, an eine aus Datenbanken bestehende Datenverarbeitungsvorrichtung übermittelt werden, um Warenlagerbestände in Abhängigkeit des jeweiligen Transportauftrags in Echtzeit zu aktualisieren

Die von dem flugfähigen Objekt 10 erzeugten Kameradaten und weitere Daten, wie zum Beispiel Sensordaten, zu denen auch die Identifikationsdaten zählen, können für weitere Anwendungen zusätzlich drahtlos an andere in der Umgebung befindliche Fahrzeuge bzw. Flurförderzeuge und / oder an andere Stellen und Einrichtungen übermittelt werden, welche sich außerhalb des Flurförderzeugs 1 befinden. Das können zum Beispiel zentrale Datenverarbeitungssysteme oder IT-Systeme sein, die diese Daten speichern und weiterverarbeiten. Derartige Systeme können auch ausgebildet sein, mit dem flugfähigen Objekt 10 und / oder dem Flurförderzeug 1 bidirektional Daten auszutauschen. Weitere Anwendungen, die die von dem flugfähigen Objekt 10 erzeugten Kameradaten und / oder Sensordaten nutzen können, sind zum Beispiel Systeme zur Lagerüberwachung bzw. Lagerkontrolle, Navigationssysteme sowie Systeme zur Kollisionsverhinderung, der Schrankensteuerung und der Geschwindigkeitsoptimierung oder -verstetigung eines Verkehrsflusses von Transportfahrzeugen in Lagerhallen.

Des Weiteren können die von der Flugdrohne übertragenen Kameradaten oder weitere Daten bzw. Informationen auf verschiedene Arten sinnvoll für die Verbesserung der Sicherheit und der Ergonomie des Fahrers 5 verwendet werden. Die Daten können auf ein realistisches Bild umgerechnet werden und in die reale Wahrnehmung des Fahrers 5 eingepasst werden. Dies kann auch mit Zusatzinformationen wie Augpunkterfassung erfolgen.

Zudem können die von dem flugfähigen Objekt 10 übertragenen Kameradaten zu einer sogenannten Lasthandling-Unterstützung genutzt werden, um die Last selbst und Warenlagerregalfächer darzustellen, wobei die Bewegung des flugfähigen Objekts 10 insbesondere beim Heben von Lasten in großen Einlagerhöhen mit der Fahrbewegung des Flurförderzeugs 1 bzw. der Bewegung des Lastaufnahmemittels 2 bzw. der darauf befindlichen Last synchronisiert ist - das flugfähige Objekt 10 fährt also in diesem Sinne mit. Dabei können die an dem flugfähigen Objekt 10 installierten Leuchtmittel 20, wie zum Beispiel LED-Scheinwerfer, zugleich das Regalfach ausleuchten, um dem Fahrer 5 das Einlagern und Auslagern einer Last zu erleichtern.

Die Erfindung weist eine Reihe von Vorteilen auf.

Mit dem flugfähigen Objekt 10 wird auf einfache Weise eine nahezu vollständige räumliche Erfassung des Umgebungsbereichs 14 des Flurförderzeugs 1 vor und / oder über der Last 22 möglich. Für den Fahrer des Flurförderzeugs 1 ergibt sich mit dem flugfähigen Objekt 10 eine verbesserte Sicht und eine verbesserte Ergonomie.

Das flugfähige Objekt 10 ist zudem relativ sicher und geschützt vor Beschädigungen betreibbar.

## Patentansprüche

1. Flurförderzeug (1) mit einem Lastaufnahmemittel (2), einem Fahrzeugkörper (6) und einem Fahrerschutzdach (3), das einen Fahrerarbeitsplatz (4) für einen Fahrer (5) aufweist, umfassend:
- eine Kommunikationsschnittstelle (8);
- mindestens eine Anzeigevorrichtung (7), welche über die Kommunikationsschnittstelle (8) mit mindestens einem flugfähigen Objekt (10) verbindbar ist,
- wobei das flugfähige Objekt (10) mindestens eine Aufnahmevorrichtung (12) umfasst, welche ausgebildet ist, während einer Betriebsposition des flugfähigen Objekts (10) einen Bildausschnitt (13) aufzunehmen, der einen Umgebungsbereich (14) des Flurförderzeugs (1) darstellt, und
- wobei der aufgenommene Bildausschnitt (13) von der Aufnahmevorrichtung (12) des flugfähigen Objekts (10) über die Kommunikationsschnittstelle (8) als Kameradaten zur Darstellung auf der mindestens einen Anzeigevorrichtung (7) des Flurförderzeugs (1) übermittelbar ist.

2. Flurförderzeug (1) nach Anspruch 1, umfassend eine Steuerungsvorrichtung (9), welche mit der Kommunikationsschnittstelle (8) verbindbar ist, und wobei die Steuerungsvorrichtung (9) ferner ausgebildet ist, das flugfähige Objekt (10) anzusteuern, um das flugfähige Objekt (10) von einer Parkposition in die Betriebsposition zu bringen.

3. Flurförderzeug (1) nach Anspruch 2, wobei die Betriebsposition des flugfähigen Objekts (10) in Abhängigkeit des aufzunehmenden Bildausschnitts (13) durch die Steuerungsvorrichtung (9) einstellbar ist.

4. Flurförderzeug (1) nach einem der vorangegangenen Ansprüche, wobei die Betriebsposition des flugfähigen Objekts (10) eine fahrzeugnahe Position darstellt, in welcher sich das flugfähige Objekt (10) in einem optimierten Abstand vor und / oder über dem Lastaufnahmemittel (2) des Flurförderzeugs (1) befindet.

5. Flurförderzeug (1) nach einem der vorangegangenen Ansprüche, wobei die Anzeigevorrichtung (7) zwischen dem Lastaufnahmemittel (2) und dem Fahrerschutzdach (3) anbringbar ist, wobei die Anzeigevorrichtung (7) insbesondere innerhalb eines Sichtfelds (15) des Fahrers (5) anbringbar ist.

6. Flurförderzeug (1) nach einem der vorangegangenen Ansprüche, wobei die Anzeigevorrichtung (7) mindestens einen Bildschirm (7a, 7b) umfasst.

7. Flurförderzeug (1) nach einem der vorangegangenen Ansprüche, wobei die Aufnahmevorrichtung (12) des flugfähigen Objekts (10) mindestens eine Kamera (12a, 12b), insbesondere eine Stereo-Kamera, umfasst.

8. Flurförderzeug (1) nach einem der vorangegangenen Ansprüche, wobei die Aufnahmevorrichtung (12) des flugfähigen Objekts (10) eine erste Kamera (12a) zur Aufnahme eines ersten Bildausschnitts (13a) und eine weitere Kamera (12b) zur Aufnahme eines zweiten Bildausschnitts (13b) umfasst.

9. Flurförderzeug (1) nach Anspruch 8, wobei der erste Bildausschnitt (13a) über die Kommunikationsschnittstelle (8) auf dem ersten Bildschirm (7a) und der zweite Bildausschnitt (13b) über die Kommunikationsschnittstelle (8) auf dem zweiten Bildschirm (7b) darstellbar ist.

10. Flurförderzeug (1) nach einem der vorangegangenen Ansprüche, umfassend mindestens einen Flächenabschnitt (16), welcher ausgebildet ist, das flugfähige Objekt (10) für eine Parkposition aufzunehmen.

11. Flurförderzeug (1) nach Anspruch 10, wobei der mindestens eine Flächenabschnitt (16) eine Fläche auf dem Fahrerschutzdach (3) und / oder auf dem Fahrzeugkörper (6) und / oder auf dem Lastaufnahmemittel (2) umfasst.

12. Flurförderzeug (1) nach einem der vorangegangenen Ansprüche, wobei die Kameradaten der Aufnahmevorrichtung (12) des flugfähigen Objekts (10) an die Kommunikationsschnittstelle (8) des Flurförderzeugs (1) drahtlos übertragbar sind.

13. Flurförderzeug (1) nach einem der Ansprüche 10 bis 12, wobei der Flächenabschnitt (16) ferner als eine Ladestation ausgebildet ist, elektrische Energie von dem Flurförderzeug (1) zu dem flugfähigen Objekt (10) während seiner Parkposition auf dem Flächenabschnitt (16) zu übertragen, um einen Energiespeicher (11) des flugfähigen Objekts (10) aufzuladen.

14. Flurförderzeug (1) nach einem der vorangegangenen Ansprüche, wobei die Kameradaten der Aufnahmevorrichtung (12) des flugfähigen Objekts (10) an die Kommunikationsschnittstelle (8) des Flurförderzeugs (1) kabelgebunden durch ein Kabel (17), welches das flugfähige Objekt (10) und das Flurförderzeug (1) miteinander verbindet, übertragbar sind.

15. Flurförderzeug (1) nach Anspruch 14, wobei das Kabel (17) ferner ausgebildet ist, elektrische Energie von dem Flurförderzeug (1) zu dem flugfähigen Objekt (10) zu dessen Betrieb zu übertragen.

16. Flurförderzeug (1) nach einem der vorangegangenen Ansprüche, wobei die Kommunikationsschnittstelle (8) ausgebildet ist, die erzeugten Kameradaten in eine für den Fahrer (5) geeignete Perspektive, vorzugsweise eine Fahrerperspektive und / oder eine Bird-View-Perspektive, in Abhängigkeit von der verwendeten Anzeigevorrichtung (7) umzurechnen.

17. Flurförderzeug (1) nach einem der vorangegangenen Ansprüche, wobei die Anzeigevorrichtung (7) als ein Bildschirm und /oder als ein transparentes Display und / oder als ein Head-up-Display und / oder als ein Sichtmittel zur Darstellung von 3D-animierten Umgebungsinformationen auf Basis der erzeugten Kameradaten ausgebildet ist.

18. Flurförderzeug (1) nach einem der vorangegangenen Ansprüche, wobei die erzeugten Kameradaten über die Kommunikationsschnittstelle (8) einem im Flurförderzeug (1) vorgesehenen Kollisionswarnsystem (18) und / oder einem Manövrierassistenzsystem (19) übermittelt werden.

19. Flurförderzeug (1) nach einem der vorangegangenen Ansprüche 2 bis 18, wobei die Steuerungsvorrichtung (9) ausgebildet ist, die Bewegung des flugfähigen Objekts (10) in Abhängigkeit von der Bewegung des Flurförderzeugs (1) anzupassen.

20. Flurförderzeug (1) nach Anspruch 19, wobei die Steuerungsvorrichtung (9) ausgebildet ist, die Bewegung des flugfähigen Objekts (10) in Abhängigkeit von einer Hubhöhe des Lastaufnahmemittels (2) anzupassen.

21. Flurförderzeug (1) nach einem der vorangegangenen Ansprüche, wobei das flugfähige Objekt (10) mindestens ein Leuchtmittel (20) umfasst, um den Umgebungsbereich (14) des Flurförderzeugs (1) auszuleuchten.

22. Flurförderzeug (1) nach einem der vorangegangenen Ansprüche, wobei das flugfähige Objekt (10) als eine Flugdrohne ausgebildet ist, welche über die Steuerungsvorrichtung (9) steuerbar ist.

23. Flurförderzeug (1) nach einem der vorangegangenen Ansprüche, wobei das flugfähige Objekt (10) eine Erfassungsvorrichtung (21) für Identifikationsmittel, insbesondere einen RFID-Transponder, einen Barcode oder einem Datamatrix-Code, aufweist, um Identifikationsdaten zu erfassen.

24. Flurförderzeug (1) nach Anspruch 23, wobei das flugfähige Objekt (10) ausgebildet ist, die Identifikationsdaten über die Kommunikationsschnittstelle (8) des Flurförderzeugs (1) an das Flurförderzeug (1) zur Darstellung auf der mindestens einen Anzeigevorrichtung (7) zu übermitteln.
